# EUROPEAN PATENT SPECIFICATION

(11) **EP 3 386 150 B1**
(45) Date of publication and mention of the grant of the patent: **16.09.2020**
(21) Application number: 16869582.3
(22) Date of filing: 02.06.2016
(51) Int. Cl.: H04L 12/24, H04L 12/26

(54) **TERMINAL FAILURE PROCESSING METHOD, DEVICE AND SYSTEM**
VERFAHREN, VORRICHTUNG UND SYSTEM ZUR VERARBEITUNG VON ANSCHLUSSFEHLERN
SYSTÈME, DISPOSITIF ET PROCÉDÉ DE TRAITEMENT DE DÉFAILLANCE D'UN TERMINAL

(30) Priority: 02.12.2015 CN 201510872273
(43) Date of publication of application: 10.10.2018
(73) Proprietor: Shenzhen TCL Digital Technology Ltd., Shenzhen, Guangdong 518054 (CN)
(72) Inventor: JIANG, Guoding, Shenzhen, Guangdong 518054 (CN); KANG, Junping, Shenzhen, Guangdong 518054 (CN)
(74) Representative: Kuhnen & Wacker Patent- und Rechtsanwaltsbüro PartG mbB
(86) International application number: PCT/CN2016/084465
(87) International publication number: WO 2017/092268

(56) References cited:
- CN-A- 101 155 230
- CN-A- 103 728 971
- CN-A- 104 132 463
- CN-A- 104 408 904
- CN-A- 105 515 847
- US-A1- 2008 161 993
- US-A1- 2013 179 538
- US-A1- 2015 312 087

## Description

### TECHNICAL FIELD

This disclosure relates to the field of terminal technologies, and more particularly relates to a method, a device, and a system for processing a terminal fault.

### BACKGROUND

With the constant development of science and technology, terminals such as smart phones and smart televisions have become mainstream in the market and have gained wide applications. In the prior art, a log file of the terminal system is stored in a ring buffer. When a new log file is generated, some old log file is overwritten. After the log file corresponding to a terminal fault is overwritten by other log files, the engineer cannot locate and analyze the terminal fault based on the log file. Instead, the engineer can only perform analysis and processing with respect to the problem fed back by the user based on experience and knowledge. However, mistakes may occur relying on experience and knowledge, leading to a low fault handling efficiency.

In US 20150312087 A1, server information handling system deployment and maintenance is enhanced with automated trouble ticket generation at a mobile telephone through an NFC transaction with a management controller. NFC transactions coordinate authorization for replacement component installation and server information handling system replacement. In one embodiment, a bezel includes an NFC device that interfaces with a management controller and stores configuration information to aid installation of replacement server information handling systems in the event of a system failure. A back-up battery provides power to an NFC support circuit that stores fault codes detected by the management controller so that fault codes are available during management controller failures. In US 20130179538 A1, techniques are described for reporting and monitoring network devices using microblog messaging. Embodiments monitor network traffic traversing a network device and performance metrics of the network device to detect occurrences of network and performance events. In response to detecting an occurrence of an event, a microblog message is generated. The microblog message contains at least a description of the occurrence. The microblog message is transmitted to a microblog service, which in turn forwards the message to subscribers. The microblog message may then be analyzed by the subscribers to determine operational attributes of the network device.

### SUMMARY

It is therefore one main object of this disclosure to provide a method, a device, and a system for processing a terminal fault, aiming to solve the technical problem of low efficiency of existing terminal fault processing.

To achieve the above object, this disclosure provides a method for processing a terminal fault, the method including the following operations. In response to detection of a fault, a terminal obtains a current fault code based on a preset fault code table. The terminal then generates fault information according to the fault code. The terminal then invokes a fault active reporting interface to send the fault information, a fault file, as well as the terminal's identification information to a server, so that the server stores associatively the fault information, the fault file, and the terminal's identification information. The fault file includes a log file. The block of the terminal invoking the fault active reporting interface to send the fault information, the fault file, and the terminal's identification information to the server so that the server stores associatively the fault information, the fault file, and the terminal's identification information includes the following operations. The terminal invokes the fault active reporting interface to send the fault information and the terminal's identification information to the server, where in the case the fault information and the terminal's identification information are not stored on the server, or in the case a time difference between a fault time of the fault information stored on the server and a fault time of the currently received fault information is greater than a preset threshold duration, the server feeds back a response message for uploading the fault file. Then in response to reception of the response message, the terminal sends the fault file to the server so that the server stores the fault file associatively with the fault information and the terminal's identification information.

In some embodiments, the method further includes the following operation, subsequent to the block of the terminal sending the fault file to the server so that the server stores the fault file associatively with the fault information and the terminal's identification information:deleting the fault file in response to reception of a save success message sent by the server.

In some embodiment, the block of the terminal generating the fault information according to the fault code includes the following operations. A fault type of the fault is determined. When the fault type is a system fault, a fault application package name corresponding to the system fault is obtained, and the fault information is generated using the fault application package name and the fault code. Otherwise when the fault type is an application fault, then the fault code is used as the fault information.

In addition, in order to achieve the foregoing object, this disclosure further provides a device for processing a terminal fault, the device including: an acquiring module configured to obtain a current fault code based on a preset fault code table when a terminal detects a fault; a generating module configured to generate fault information according to the fault code; and a transmitting module configured to invoke a fault active reporting interface and to send the fault information, a fault file, as well as the terminal's identification information to a server, so that the server stores associatively the fault information, the fault file, and the terminal's identification information, wherein the fault file includes a log file. The transmitting module is configured to: invoke the fault active reporting interface to send the fault information and the terminal's identification information to the server, where in the case the fault information and the terminal's identification information are not stored on the server, or in the case a time difference between a fault time of the fault information stored on the server and a fault time of the currently received fault information is greater than a preset threshold duration, the server feeds back a response message for uploading the fault file; and in response to reception of the response message, send the fault file to the server so that the server stores the fault file associatively with the fault information and the terminal's identification information.

In some embodiments, the device further includes:a deleting module configured to delete the fault file in response to reception of a save success message sent by the server.

In some embodiments, the generating module includes: a determining unit configured to determine a fault type of the fault; and a generating unit configured to, when the fault type is a system fault, obtain a fault application package name corresponding to the system fault, and to generate the fault information using the fault application package name and the fault code; and otherwise when the fault type is an application fault, use the fault code as the fault information.

In addition, in order to achieve the above object, this disclosure further provides a system for processing a terminal fault, the system includes a terminal and a server. The terminal is configured to: in response to detection of a fault, obtain a current fault code based on a preset fault code table, and generate fault information according to the fault code; and invoke a fault active reporting interface to send the fault information, a fault file, and the terminal's identification information to the server. The server is configured to, in response to reception of the fault information, the fault file, and the terminal's identification information sent by the terminal, store associatively the fault information, the fault file, and the terminal's identification information. The server is configured to: in response to reception of the fault information and the terminal's identification information sent by the terminal, send to the terminal a response message for uploading the fault file so that the terminal feeds back the fault file, if the fault information and the terminal's identification information are not stored on the server or if a time difference between a fault time of the fault information stored on the server and a fault time of the currently received fault information is greater than a preset threshold duration; and in response to reception of the fault file, store the fault file associatively with the fault information and the terminal's identification information.

According to the method, device, and system for processing a terminal fault that are provided by this disclosure, upon detection of a fault, the terminal invokes a fault active reporting interface to send the fault information and the terminal's identification information to a server, and then the server feeds back a response message for uploading the fault file when the fault information and the identification information of the terminal are not stored on the server, or when a time difference between a fault time of the fault information stored on the server and a fault time of the currently received fault information is greater than a preset threshold duration. Upon reception of the response message, the server stores the fault file associatively with the fault information and terminal's identification information. Thus, the engineer does not need to analyze and handle the fault based on experience and knowledge. Instead, the engineer can accurately locate and then process the terminal's fault based on the associatively stored fault information, fault file, and terminal's identification information after logging in to the server. Therefore, the fault handling efficiency is improved.

### BRIEF DESCRIPTION OF THE ACCOMPANYING DRAWINGS

FIG. 1 is an illustrative flowchart of a first embodiment of a method for processing a terminal fault in accordance with this disclosure.
FIG. 2 is a detailed flowchart illustrating the operation of invoking a fault active reporting interface to send the fault information, a fault file, as well as the terminal's identification information to a server in a second embodiment of the method for processing a terminal fault in accordance with this disclosure.
FIG. 3 is an illustrative functional block diagram of a first embodiment of a device for processing a terminal fault in accordance with this disclosure.
FIG. 4 is an illustrative structural diagram of a system for processing a terminal fault in accordance with this disclosure.

### DETAILED DESCRIPTION OF ILLUSTRATIVE EMBODIMENTS

It will be understood that the specific embodiments described herein are merely illustrative of the disclosure and are not intended to limit the disclosure.

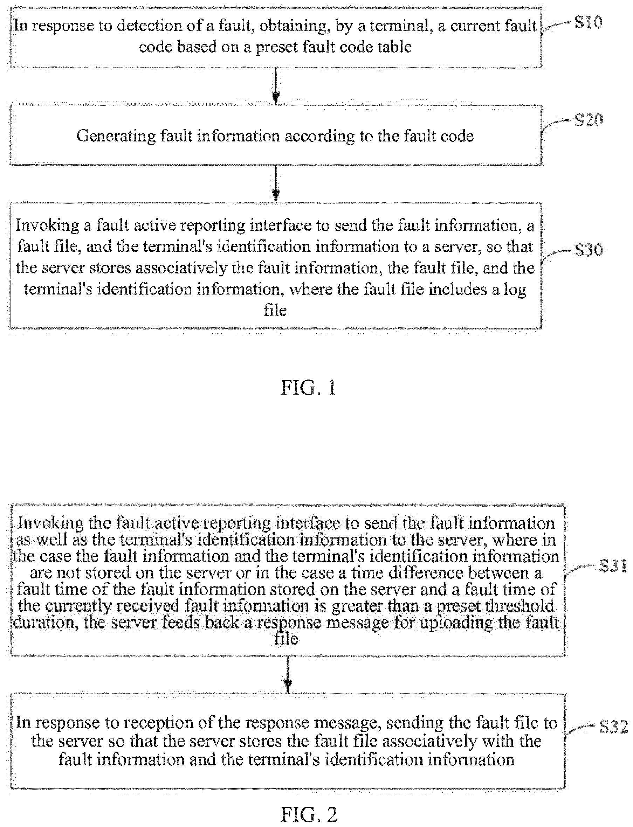

This disclosure provides a method for processing a terminal fault. Referring to FIG. 1, which is an illustrative flowchart of a first embodiment of the method for processing a terminal fault in accordance with this disclosure.

In this embodiment, the method includes the following blocks S10 to S30.

In S10, in response to detection of a fault, a terminal obtains a current fault code based on a preset fault code table. The method then proceeds to block S20.

In S20, fault information is generated according to the fault code.

The terminal mentioned in this disclosure includes, but is not limited to, a smart television, a smart phone, and the like. In this embodiment, the fault code table of the terminal is set in advance. Each type of fault of the terminal is uniformly represented by a fault code. For example, the fault code format may be implemented as a 32-bit format, where the higher 16 bits represent a module number, while the lower 16 bits represent an exception number. For example, an Audio module may be represented by 0x0003, a Launcher module may be represented by 0x0010, and a player module may be represented by 0x0020. The exception number represents a fault of a module. Different faults can be represented by different exception numbers. However, the same exception number can also be used to represent different faults of different modules. For example, when the module number is 0x0003, the exception number 0x0001 may represent an illegal parameter. When the module number is 0x0010, the exception number 0x0001 may indicate that the version is low. When the module number is 0x0020, the exception number 0x0001 may indicate that the format is not supported. In other words, the fault code 0x00030001 indicates that the Audio module parameter is an illegal parameter, fault code 0x00100001 indicates that the version of the Launcher module is low, and fault code 0x00200001 indicates that the player module format is not supported. The fault code table is preloaded in the terminal. Typically, in this embodiment, a fault processing method table corresponding to the fault code table is also set in advance, where in the fault processing method table is set a fault processing method corresponding to each fault code. For example, the corresponding fault processing method for fault code 0x00030001 may be set as "Forward to R&D: xxx@163.com for handling "so as to transfer the terminal fault to the specified personnel for processing. The corresponding fault processing method for fault code 0x00100001 may be "download the latest version from the application store". The corresponding fault processing method for fault code 0x00200001 may be "upgrade the system version to the latest version".

When it detects a fault, the terminal obtains the corresponding fault code of the fault based on the fault code table. For example, when there occurs a fault that the Audio module parameter is an illegal parameter, fault code 0x00030001 is obtained. When there occurs a fault that the version of the Launcher module is low, fault code 0x00100001 is obtained. When there occurs a fault that the player module format is not supported, fault code 0x00200001 is obtained. Based on the obtained fault code, the terminal generates the corresponding fault description information of the fault code, and then generates the corresponding fault information of this fault based on the fault code and the fault description information. At the same time, the fault file corresponding to the fault is obtained, the fault file including a log file, a configuration file, and the like. The method then continues to block S30.

In S30, a fault active reporting interface is invoked to send the fault information, the fault file, as well as the terminal's identification information to a server, so that the server stores associatively the fault information, the fault file, and the terminal's identification information.

In this embodiment, the terminal stores the identification information of the terminal such as a terminal model number and a terminal ID number. When the terminal obtains the fault information and fault file corresponding to the fault, the terminal invokes the fault active reporting interface to send the obtained fault information and fault file, as well as the terminal's identification information to the corresponding server. For example, the terminal may invoke the fault active reporting interface to send the fault information, the fault file, as well as the terminal's identification information to a fault active reporting service message queue, so that the fault active reporting service message queue can be used to send the fault information, the fault file, and the terminal's identification information to the server through HTTP POST.

After receiving the fault information, the fault file, and the terminal's identification information, the server stores associatively the fault information, the fault file, and the terminal's identification information. Typically, the server also stores a fault code table and a corresponding fault processing method table. After that, the engineer logs in to the server. Thus, by viewing the terminal's identification information saved thereon, the engineer can find out the faulty terminal. Based on the fault code table, the engineer would be able to accurately locate and analyze the terminal's fault through the saved fault information and fault file. Meanwhile, the engineer can also obtain the method for processing this fault based on the fault processing method table.

According to the solution provided by this embodiment, when it detects a fault, the terminal obtains a current fault code based on a preset fault code table, generates fault information, and further invokes a fault active reporting interface to send the fault information, a fault file, as well as the terminal's identification information to a server. The server stores associatively the received fault information, fault file, and the terminal's identification information. As such, the engineer can log in to the server and would be able to accurately locate the terminal's fault based on the fault information, the fault file, and the terminal's identification information that are associatively stored, so that the fault can further be handled. Therefore, the fault handling efficiency is improved. Meanwhile, the effect of remotely troubleshooting the terminal is also improved, thereby improving the user experience.

As illustrated in FIG. 2, there is further provided a second embodiment of the method for processing a terminal fault according to this disclosure on the basis of the first embodiment. In this embodiment, the block S30 includes the following steps S31 to S32.

In S31, a fault active reporting interface is invoked to send the fault information and the terminal's identification information to the server, where in the case the fault information and the terminal's identification information are not stored on the server, or in the case a time difference between a fault time of the fault information stored on the server and a fault time of the currently received fault information is greater than a preset threshold duration, the server feeds back a response message for uploading the fault file.

In the first embodiment, each time it finds itself in a fault, the terminal sends the fault information, the fault file and the terminal's identification information to the server. As a result, the server may be overloaded considering the server's system storage capacity. To avoid this problem, based on the first embodiment, in this embodiment when it obtains the fault information and the fault file corresponding to the fault, the terminal invokes the fault active reporting interface and first sends only the fault information and the terminal's identification information to the server. For example, the terminal may invoke the fault active reporting interface to send the fault information and the terminal's identification information to the fault active reporting service message queue, so that the fault active reporting service message queue can be used to send the fault information and the terminal's identification information to the server through HTTP POST.

After receiving the fault information and the terminal's identification information, the server queries whether the fault information and the terminal's identification information are stored on the server. When it is found that the fault information and the terminal's identification information are not stored on the server, it indicates that the terminal before has not transmitted the fault information, the terminal's identification information, and the fault file corresponding to the same fault. In this case, the server saves the fault information and the terminal's identification information. For example, the server may store the fault information and the terminal's identification information in a database. Then the server returns to the terminal a message for uploading the fault file. For example, it can be set in advance that uploading the fault file corresponds to identifier 1, while not uploading the fault file corresponds to identifier 0. After saving the fault information and the terminal's identification information, the server returns a response message carrying identifier 1 to the terminal. When it is found that the fault information and the terminal's identification information are stored on the server, it indicates that the terminal before has transmitted the fault information, the terminal's identification information, and the fault file corresponding to the same fault. The server may save the received fault information and the terminal's identification information in the database, and then returns to the terminal a response message for not uploading the fault file, e.g., returns a response message carrying identifier 0 to the terminal. Alternatively, the server may also not save the received fault information and the terminal's identification information, and directly returns to the terminal a response message for not uploading the fault file.

Further, in this embodiment, the fault information corresponding to the terminal fault may further include a fault time. During its use, the terminal may undergo system updates and version upgrades. Thus, for the same type of fault, the fault file corresponding to this fault the terminal obtains before a system update or version upgrade may be different than the fault file corresponding to this fault the terminal obtains after the system update or version upgrade. In this case, after the terminal sends the fault information and the terminal's identification information corresponding to this fault to the server, the server finds that the fault information and the terminal's identification information are stored on the server, which indicates that the terminal before has sent the fault information, the terminal's identification information, and the fault file that correspond to this fault. At this time, the server returns to the terminal a response message for not uploading the fault file. In fact, however, the fault file corresponding to this fault that is saved by the server may be different from the fault file corresponding to this fault that is currently obtained by the terminal. As such, the engineer may not be able to effectively solve the fault problem based on the fault file stored by the server. In order to avoid this from happening, in this embodiment a preset threshold duration is further set in advance. For example, the preset threshold duration may be set to a period of one week. When it finds that the fault information and the terminal's identification information are stored thereon, the server further determines whether a time difference between a fault time of the saved fault information and a fault time of the currently received fault information is greater than the preset threshold duration. When the time difference between the fault time of the saved fault information and the fault time of the currently received fault information is less than or equal to the preset threshold duration, it indicates that the terminal has the same fault in a short period of time, but usually the terminal will not perform system upgrades and version upgrades in a short time. As such, the server may return a response message to the terminal for not uploading the fault file. When the time difference between the fault time of the stored fault information and the fault time of the currently received fault information is greater than the preset threshold duration, then it indicates that it has been a period of time since last time the terminal had the same fault, such that the fault file corresponding to the fault saved by the server may be different from the fault file corresponding to the fault currently obtained by the terminal. As such, the server may save the received fault information, fault time, and the terminal's identification information. Optionally, the server may delete the previously saved fault information, fault time, fault file, and terminal's identification information that correspond to this fault. The server returns a response message for uploading the fault file.

In S32, in response to reception of the response message,the fault file is sent to the server so that the server stores the fault file associatively with the fault information and the terminal's identification information.

When it receives from the server the response message for uploading the fault file, the terminal sends the fault file corresponding to the fault to the server. For example, the terminal may compress and package the fault file corresponding to the fault before sending it to the server through HTTP POST. When the server receives the fault file, it stores the fault file associatively with the fault information and the terminal's identification information. Typically, the server stores the storage address of the fault file in the database in which the fault information and the terminal's identification information are stored. After storing the fault file associatively with the fault information and the terminal's identification information, the server returns a save success message to the terminal.

Further, in this embodiment, the method may further include the following step a subsequent to step S32.

In step a, the fault file is deleted in response to reception of the save success message sent by the server.

After the server returns the save success message to the terminal and the terminal receives the save success message, namely after the fault file has been successfully stored in the server, the terminal deletes the fault file in the terminal. As a result, the terminal gains more storage space.

Further, in this embodiment, the block S20 may include the following steps b to d.

In step b, a fault type of the fault is determined.

In step c, when the fault type is a system fault, a fault application package name corresponding to the system fault is obtained, and the fault information is generated using the fault application package name and the fault code.

In step d, when the fault type is otherwise an application fault, the fault code is used as the fault information.

Terminal faults usually fall into two categories, system faults and application faults. Upon detection of a fault, the terminal determines the fault type of the fault while obtaining the current fault code based on the preset fault code table. If the fault type is a system fault, the fault information corresponding to the system fault may include the fault code, the fault description information, the name of the fault application package that causes the system fault, and so on. Otherwise if the fault type is an application fault, then the fault information corresponding to the application fault may include the fault code, the fault description information, and so on. Thus, when it determines that the fault is a system fault, the terminal may further obtain the fault application package name corresponding to the system fault, and then generates the fault information using the fault application package name and the fault code. Otherwise when the fault type is an application fault, then the fault code is used as the fault information. Typically, for some simple application faults, the fault information is enough for accurately locating and analyzing the fault without needing the fault file. Therefore, the engineer can set in advance that for each of various application faults whether the fault file needs to be sent to the server. When it detects that the fault type is an application fault and for this application fault the fault file needn't be sent to the server, then the terminal may directly send the fault information and the terminal's identification information corresponding to this application fault to the server for saving. As such, the engineer would be able to handle the terminal's application faults based on the saved fault information and terminal's identification information.

According to the solution provided by this embodiment, the terminal invokes the fault active reporting interface to first send the fault information and the terminal's identification information to the server. After receiving the fault information and the terminal's identification information, the server returns to the terminal a response message for uploading the fault file when detecting that the fault information and the terminal's identification information are not stored on the server or when a time difference between the fault time of the fault information stored on the server and the fault time of the currently received fault information is greater than a preset threshold duration. Then when receiving the response message for uploading the fault file, the terminal sends the fault file to the server so that the server stores the fault file associatively with the fault information and the terminal's identification information. This solves the problem that the fault file is sent to the server at every fault causing the server to be overloaded.

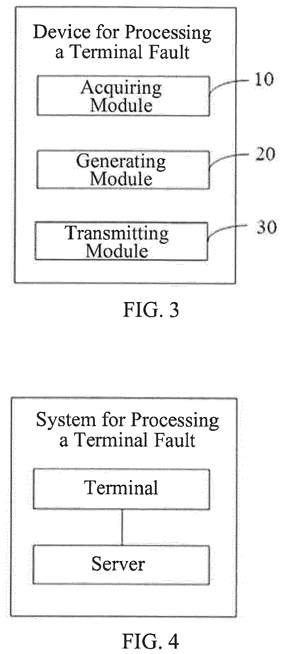

This disclosure further provides a device for processing a terminal fault. Referring to FIG. 3, which is an illustrative functional block diagram of the device for processing a terminal fault in accordance with this disclosure.

In this embodiment, the device includes an acquiring module 10, a generation module 20, and a transmitting module 30.

The acquiringmodule 10 is configured to obtain a current fault code based on a preset fault code table when a terminal detects a fault.

The generatingmodule 20 is configured to generate fault information according to the fault code.

The terminal mentioned in this disclosure includes, but is not limited to, a smart television, a smart phone, and the like. In this embodiment, the fault code table of the terminal is set in advance. Each type of fault of the terminal is uniformly represented by a fault code. For example, the fault code format may be implemented as a 32-bit format, where the higher 16 bits represent a module number, while the lower 16 bits represent an exception number. For example, an Audio module may be represented by 0x0003, a Launcher module may be represented by 0x0010, and a player module may be represented by 0x0020. The exception number represents a fault of a module. Different faults can be represented by different exception numbers. However, the same exception number can also be used to represent different faults of different modules. For example, when the module number is 0x0003, the exception number 0x0001 may represent an illegal parameter. When the module number is 0x0010, the exception number 0x0001 may indicate that the version is low. When the module number is 0x0020, the exception number 0x0001 may indicate that the format is not supported. In other words, the fault code 0x00030001 indicates that the Audio module parameter is an illegal parameter, fault code 0x00100001 indicates that the version of the Launcher module is low, and fault code 0x00200001 indicates that the player module format is not supported. The fault code table is preloaded in the terminal. Typically, in this embodiment, a fault processing method table corresponding to the fault code table is also set in advance, where in the fault processing method table is set a fault processing method corresponding to each fault code. For example, the corresponding fault processing method for fault code 0x00030001 may be set as "Forward to R&D: xxx@163.com for handling "so as to transfer the terminal fault to the specified personnel for processing. The corresponding fault processing method for fault code 0x00100001 may be "download the latest version from the application store". The corresponding fault processing method for fault code 0x00200001 may be "upgrade the system version to the latest version".

When the terminal detects a fault, the acquiring module 10 obtains the corresponding fault code of the fault based on the fault code table. For example, when there occurs a fault that the Audio module parameter is an illegal parameter, fault code 0x00030001 is obtained. When there occurs a fault that the version of the Launcher module is low, fault code 0x00100001 is obtained. When there occurs a fault that the player module format is not supported, fault code 0x00200001 is obtained. At the same time, the acquiring module 10 obtains the fault file corresponding to the fault, the fault file including a log file, a configuration file, and the like. Based on the obtained fault code, the generating module 20 generates the corresponding fault description information of the fault code, and then generates the corresponding fault information of this fault based on the fault code and the fault description information.

The transmitting module 30 is configured to invoke a fault active reporting interface to send the fault information, the fault file, as well as the terminal's identification information to a server, so that the server stores associatively the fault information, the fault file, and the terminal's identification information.

In this embodiment, the terminal stores the identification information of the terminal such as a terminal model number and a terminal ID number. When the fault information and fault file corresponding to the fault are obtained, the transmitting module 30 invokes the fault active reporting interface to send the obtained fault information and fault file, as well as the terminal's identification information to the corresponding server. For example, the transmitting module 30 may invoke the fault active reporting interface to send the fault information, the fault file, as well as the terminal's identification information to a fault active reporting service message queue, so that the fault active reporting service message queue can be used to send the fault information, the fault file, and the terminal's identification information to the server through HTTP POST.

After receiving the fault information, the fault file, and the terminal's identification information, the server stores associatively the fault information, the fault file, and the terminal's identification information. Typically, the server also stores a fault code table and a corresponding fault processing method table. After that, the engineer logs in to the server. Thus, by viewing the terminal's identification information saved thereon, the engineer can find out the faulty terminal. Based on the fault code table, the engineer would be able to accurately locate and analyze the terminal's fault through the saved fault information and fault file. Meanwhile, the engineer can also obtain the method for processing this fault based on the fault processing method table.

According to the solution provided by this embodiment, after the acquiring module 10 obtains a current fault code based on a preset fault code table and the generating module 20 generates the fault information according to the fault code, the transmitting module 30 invokes a fault active reporting interface to send the fault information, a fault file, as well as the terminal's identification information to a server. The server stores associatively the received fault information, fault file, and the terminal's identification information. As such, the engineer can log in to the server and would be able to accurately locate the terminal's fault based on the fault information, the fault file, and the terminal's identification information that are associatively stored, so that the fault can further be handled. Therefore, the fault handling efficiency is improved. Meanwhile, the effect of remotely troubleshooting the terminal is also improved, thereby improving the user experience.

There is further provided a second embodiment of the device for processing a terminal fault according to this disclosure on the basis of the above first embodiment. In this embodiment, the transmitting module 30 is configured to:invoke the fault active reporting interface to send the fault information and the terminal's identification information to the server, where in the case the fault information and the terminal's identification information are not stored on the server, or in the case a time difference between a fault time of the fault information stored on the server and a fault time of the currently received fault information is greater than a preset threshold duration, the server feeds back a response message for uploading the fault file; and in response to reception of the response message, send the fault file to the server so that the server stores the fault file associatively with the fault information and the terminal's identification information.

In the first embodiment, each time it finds itself in a fault, the transmitting module 30 sends the fault information, the fault file and the terminal's identification information to the server. As a result, the server may be overloaded considering the server's system storage capacity. To avoid this problem, based on the first embodiment, in this embodiment when the fault information and the fault file corresponding to the fault are obtained, the transmitting module 30 invokes the fault active reporting interface and first sends only the fault information and the terminal's identification information to the server. For example, the transmitting module 30 may invoke the fault active reporting interface to send the fault information and the terminal's identification information to the fault active reporting service message queue, so that the fault active reporting service message queue can be used to send the fault information and the terminal's identification information to the server through HTTP POST.

After receiving the fault information and the terminal's identification information, the server queries whether the fault information and the terminal's identification information are stored on the server. When it is found that the fault information and the terminal's identification information are not stored on the server, it indicates that the terminal before has not transmitted the fault information, the terminal's identification information, and the fault file corresponding to the same fault. In this case, the server saves the fault information and the terminal's identification information. For example, the server may store the fault information and the terminal's identification information in a database. Then the server returns to the terminal a message for uploading the fault file. For example, it can be set in advance that uploading the fault file corresponds to identifier 1, while not uploading the fault file corresponds to identifier 0. After saving the fault information and the terminal's identification information, the server returns a response message carrying identifier 1 to the terminal. When it is found that the fault information and the terminal's identification information are stored on the server, it indicates that the terminal before has transmitted the fault information, the terminal's identification information, and the fault file corresponding to the same fault. The server may save the received fault information and the terminal's identification information in the database, and then returns to the terminal a response message for not uploading the fault file, e.g., returns a response message carrying identifier 0 to the terminal. Alternatively, the server may also not save the received fault information and the terminal's identification information, and directly returns to the terminal a response message for not uploading the fault file.

Further, in this embodiment, the fault information corresponding to the terminal fault may further include a fault time. During its use, the terminal may undergo system updates and version upgrades. Thus, for the same type of fault, the fault file corresponding to this fault the terminal obtains before a system update or version upgrade may be different than the fault file corresponding to this fault the terminal obtains after the system update or version upgrade. In this case, after the transmitting module 30 invokes the fault active reporting interface to send the fault information and the terminal's identification information corresponding to this fault to the server, the server finds that the fault information and the terminal's identification information are stored on the server, which indicates that the terminal before has sent the fault information, the terminal's identification information, and the fault file that correspond to this fault. At this time, the server returns to the terminal a response message for not uploading the fault file. In fact, however, the fault file corresponding to this fault that is saved by the server may be different from the fault file corresponding to this fault that is currently obtained by the terminal. As such, the engineer may not be able to effectively solve the fault problem based on the fault file stored by the server. In order to avoid this from happening, in this embodiment a preset threshold duration is further set in advance. For example, the preset threshold duration may be set to a period of one week. When it finds that the fault information and the terminal's identification information are stored thereon, the server further determines whether a time difference between a fault time of the saved fault information and a fault time of the currently received fault information is greater than the preset threshold duration. When the time difference between the fault time of the saved fault information and the fault time of the currently received fault information is less than or equal to the preset threshold duration, it indicates that the terminal has the same fault in a short period of time, but usually the terminal will not perform system upgrades and version upgrades in a short time. As such, the server may return a response message to the terminal for not uploading the fault file. When the time difference between the fault time of the stored fault information and the fault time of the currently received fault information is greater than the preset threshold duration, then it indicates that it has been a period of time since last time the terminal had the same fault, such that the fault file corresponding to the fault saved by the server may be different from the fault file corresponding to the fault currently obtained by the terminal. As such, the server may save the received fault information, fault time, and the terminal's identification information. Optionally, the server may delete the previously saved fault information, fault time, fault file, and terminal's identification information that correspond to this fault. The server returns a response message for uploading the fault file.

When the response message for uploading the fault file is fed back from the server, the transmitting module 30 sends the fault file corresponding to the fault to the server. For example, the transmitting module 30 may compress and package the fault file corresponding to the fault before sending it to the server through HTTP POST. When the server receives the fault file, it stores the fault file associatively with the fault information and the terminal's identification information. Typically, the server stores the storage address of the fault file in the database in which the fault information and the terminal's identification information are stored. After storing the fault file associatively with the fault information and the terminal's identification information, the server returns a save success message to the terminal.

In this embodiment, the device for processing a terminal fault may further include a deleting module configured to delete the fault file in response to reception of a save success message sent by the server.

After the server returns the save success message to the terminal and the save success message is received, namely after the fault file has been successfully stored in the server, the deleting module deletes the fault file in the terminal. As a result, the terminal gains more storage space.

Further, in this embodiment, the generating module 20 includes:a determining unit configured to determine a fault type of the fault; anda generatingunit configured to, when the fault type is a system fault, obtain a fault application package name corresponding to the system fault, and to generate the fault information using the fault application package name and the fault code; and otherwise when the fault type is an application fault, use the fault code as the fault information.

Terminal faults usually fall into two categories, system faults and application faults. When the terminal detects a fault, after the acquiring module 10 obtains the current fault code based on the preset fault code table, the determining unit determines the fault type of the fault. If the fault type is a system fault, the fault information corresponding to the system fault may include the fault code, the fault description information, the name of the fault application package that causes the system fault, and so on. Otherwise if the fault type is an application fault, then the fault information corresponding to the application fault may include the fault code, the fault description information, and so on. Thus, when the determining unit determines that the fault is a system fault, the generatingunit may further obtain the fault application package name corresponding to the system fault, and then generates the fault information using the fault application package name and the fault code. Otherwise when the fault type is an application fault, then the fault code is used as the fault information. Typically, for some simple application faults, the fault information is enough for accurately locating and analyzing the fault without needing the fault file. Therefore, the engineer can set in advance that for each of various application faults whether the fault file needs to be sent to the server. When the determining module determines that the fault type is an application fault and for this application fault the fault file needn't be sent to the server, then the transmitting module 30 may invoke the fault active reporting interface and directly send the fault information and the terminal's identification information corresponding to this application fault to the server for saving. As such, the engineer would be able to handle the terminal's application faults based on the saved fault information and terminal's identification information.

According to the solution provided by this embodiment, the transmitting module 30 invokes the fault active reporting interface to first send the fault information and the terminal's identification information to the server. After receiving the fault information and the terminal's identification information, the server returns a response message for uploading the fault file when detecting that the fault information and the terminal's identification information are not stored on the server or when a time difference between the fault time of the fault information stored on the server and the fault time of the currently received fault information is greater than a preset threshold duration. Then when the response message for uploading the fault file is received, the transmitting module 30 sends the fault file to the server so that the server stores the fault file associatively with the fault information and the terminal's identification information. This solves the problem that the fault file is sent to the server at every fault causing the server to be overloaded.

This disclosure further provides a system for processing a terminal fault. Referring to FIG. 4, which is an illustrative structural diagram of an embodiment of the system for processing a terminal fault in accordance with this disclosure.

In this embodiment, the terminal is configured to: in response to detection of a fault, obtain a current fault code based on a preset fault code table, and generate fault information according to the fault code; and invoke a fault active reporting interface to send the fault information, a fault file, and the terminal's identification information to the server.

The server is configured to, in response to reception of the fault information, the fault file, and the terminal's identification information sent by the terminal, store associatively the fault information, the fault file, and the terminal's identification information.

In the system for processing a terminal fault according to this disclosure, when it detects a fault, the terminal obtains a fault code corresponding to the fault based on a preset fault code table, and then generates fault information, and further sends the fault information, a fault file as well as the terminal's identification information to the server.

When receiving the fault information, the fault file, and the terminal's identification information sent by the terminal, the server stores associatively the fault information, the fault file, and the terminal's identification information. After that, the engineer logs in to the server. Thus, by viewing the terminal's identification information saved thereon, the engineer can find out the faulty terminal. Based on the fault code table, the engineer would be able to accurately locate and analyze the terminal's fault through the saved fault information and fault file. Meanwhile, the engineer can also obtain the method for processing this fault based on the fault processing method table.

Further, the terminal invokes the fault active reporting interface and first sends only the fault information and the terminal's identification information to the server. After receiving the fault information and the terminal's identification information sent by the terminal, the server queries whether the fault information and the terminal's identification information are stored on the server. When it finds that the fault information and the terminal's identification information are not stored thereon, the server sends a response message to the terminal for uploading the fault file. Otherwise when it finds that the fault information and the terminal's identification information are stored thereon, the server further detects whether a time difference between a fault time of the stored fault information and a fault time of the currently received fault information is greater than a preset threshold duration. When the time difference between the fault time of the stored fault information and the fault time of the currently received fault information is greater than the preset threshold duration, the server sends to the terminal the response message for uploading the fault file. When it receives from the server the response message for uploading the fault file, the terminal sends the fault file corresponding to the fault to the server. After receiving the fault file sent by the terminal, the server stores the fault file associatively with the fault information and the terminal's identification information.

According to the solution provided by this embodiment, when it detects a fault, the terminal obtains a fault code corresponding to the fault based on a preset fault code table, generates fault information, and further sends the fault information, a fault file, as well as the terminal's identification information to a server. After receiving the fault information, the fault file, and the terminal's identification information that are sent by the terminal, the server stores associatively the received fault information, fault file, and the terminal's identification information. As such, the engineer can log in to the server and would be able to accurately locate the terminal's fault based on the fault information, the fault file, and the terminal's identification information that are associatively stored, so that the fault can further be handled. Therefore, the fault handling efficiency is improved. Meanwhile, the effect of remotely troubleshooting the terminal is also improved, thereby improving the user experience.

## Claims

1. A method for processing a terminal fault, comprising:
in response to detection of a fault, obtaining, by a terminal, a current fault code based on a preset fault code table;
generating fault information according to the fault code; and
invoking a fault active reporting interface to send the fault information, a fault file, and identification information of the terminal to a server, so that the server stores associatively the fault information, the fault file, and the identification information of the terminal, in which the fault file comprises a log file, **characterized in that**, the block of invoking the fault active reporting interface to send the fault information, the fault file, and the identification information of the terminal to the server so that the server stores associatively the fault information, the fault file, and the identification information of the terminal comprises:
invoking the fault active reporting interface to send the fault information and the identification information of the terminal to the server, wherein when the fault information and the identification information of the terminal are not stored on the server, or when a time difference between a fault time of the fault information stored on the server and a fault time of the currently received fault information is greater than a preset threshold duration, the server feeds back a response message for uploading the fault file; and
in response to reception of the response message, sending the fault file to the server so that the server stores the fault file associatively with the fault information and the identification information of the terminal.

2. The method of claim 1, **characterized in that**, the method further comprises, subsequent to sending the fault file to the server so that the server stores the fault file associatively with the fault information and the identification information of the terminal:
deleting the fault file in response to reception of a save success message sent by the server.

3. The method of claim 1, **characterized in that**, generating the fault information according to the fault code comprises:
determining a fault type of the fault;
when the fault type is a system fault, obtaining a fault application package name corresponding to the system fault, and generating the fault information using the fault application package name and the fault code; and
otherwise when the fault type is an application fault, using the fault code as the fault information.

4. The method of claim 2, **characterized in that**, generating the fault information according to the fault code comprises:
determining a fault type of the fault;
when the fault type is a system fault, obtaining a fault application package name corresponding to the system fault, and generating the fault information using the fault application package name and the fault code; and
otherwise when the fault type is an application fault, using the fault code as the fault information.

5. A device for processing a terminal fault, comprising:
an acquiring module (10), configured to obtain a current fault code based on a preset fault code table when a terminal detects a fault;
a generating module (20), configured to generate fault information according to the fault code; and
a transmitting module (30), configured to invoke a fault active reporting interface to send the fault information, a fault file, and identification information of the terminal to a server, so that the server stores associatively the fault information, the fault file, and the identification information of the terminal, wherein the fault file comprises a log file, **characterized in that**, the transmitting module (30) is configured to:
invoke the fault active reporting interface to send the fault information and the identification information of the terminal to the server, wherein when the fault information and the identification information of the terminal are not stored on the server, or when a time difference between a fault time of the fault information stored on the server and a fault time of the currently received fault information is greater than a preset threshold duration, the server feeds back a response message for uploading the fault file; and
in response to reception of the response message, send the fault file to the server so that the server stores the fault file associatively with the fault information and the identification information of the terminal.

6. The device of claim 5, **characterized in that**, the device further comprises:
a deleting module, configured to delete the fault file in response to reception of a save success message sent by the server.

7. The device of claim 5, **characterized in that**, the generating module (20) comprises:
a determining unit, configured to determine a fault type of the fault; and
a generating unit, configured to, when the fault type is a system fault, obtain a fault application package name corresponding to the system fault, and to generate the fault information using the fault application package name and the fault code; and otherwise when the fault type is an application fault, use the fault code as the fault information.

8. The device of claim 6, **characterized in that**, the generating module (20) comprises:
a determining unit, configured to determine a fault type of the fault; and
a generating unit, configured to: when the fault type is a system fault, obtain a fault application package name corresponding to the system fault, and to generate the fault information using the fault application package name and the fault code; and otherwise when the fault type is an application fault, use the fault code as the fault information.

9. A system for processing a terminal fault, the system comprising a terminal and a server, wherein:
the terminal is configured to: in response to detection of a fault, obtain a current fault code based on a preset fault code table, and generate fault information according to the fault code; and invoke a fault active reporting interface to send the fault information, a fault file, and identification information of the terminal to the server;
the server is configured to, in response to reception of the fault information, the fault file, and the identification information of the terminal sent by the terminal, store associatively the fault information, the fault file, and the identification information of the terminal,
**characterized in that**, the server is configured to:
in response to reception of the fault information and the terminal's identification information sent by the terminal, send to the terminal a response message for uploading the fault file so that the terminal feeds back the fault file, if the fault information and the identification information of the terminal are not stored on the server or if a time difference between a fault time of the fault information stored on the server and a fault time of the currently received fault information is greater than a preset threshold duration; and
in response to reception of the fault file, store the fault file associatively with the fault information and the identification information of the terminal.

## Patentansprüche

1. Verfahren zum Verarbeiten eines Endgerätefehlers, umfassend:
Ermitteln eines aktuellen Fehlercodes auf Basis einer voreingestellten Fehlercode-Tabelle durch ein Endgerät als Reaktion auf eine Erfassung eines Fehlers
Erzeugen von Fehlerinformationen gemäß dem Fehlercode; und Auffordern einer Fehleraktivitätsmeldungs-Schnittstelle, die Fehlerinformationen, eine Fehlerdatei und Identifizierungsinformationen des Endgeräts an einen Server zu senden, damit der Server die Fehlerinformationen, die Fehlerdatei und die Identifizierungsinformationen des Endgeräts zusammenhängend speichert, wobei die Fehlerdatei eine Log-Datei beinhaltet,
**dadurch gekennzeichnet, dass** der Block zum Auffordern der Fehleraktivitätsmeldungs-Schnittstelle, die Fehlerinformationen, die Fehlerdatei und die Identifizierungsinformationen des Endgeräts an den Server zu senden, damit der Server die Fehlerinformationen, die Fehlerdatei und die Identifizierungsinformationen des Endgeräts zusammenhängend speichert, umfasst: Auffordern der Fehleraktivitätsmeldungs-Schnittstelle, die Fehlerinformationen und die Identifizierungsinformationen des Endgeräts an den Server zu senden, wobei dann, wenn die Fehlerinformationen und die Identifizierungsinformationen des Endgeräts nicht auf dem Server gespeichert sind oder wenn ein Zeitunterschied zwischen einer Fehlerzeit der auf dem Server gespeicherten Fehlerinformationen und eine Fehlerzeit der aktuell empfangenen Fehlerinformationen größer ist als ein vorangestellter Schwellenwert für eine Dauer, der Server eine Antwortnachricht zum Hochladen der Fehlerdatei zurückmeldet; und
Senden der Fehlerdatei an den Server als Antwort auf den Empfang der Antwortnachricht, damit der Server die Fehlerdatei im Zusammenhang mit den Fehlerinformationen und den Identifizierungsinformationen des Endgeräts speichert.

2. Verfahren nach Anspruch 1, **dadurch gekennzeichnet, dass** das Verfahren ferner im Anschluss an das Senden der Fehlerdatei an den Server, damit der Server die Fehlerdatei im Zusammenhang mit den Fehlerinformationen und den Identifizierungsinformationen des Endgeräts speichert, umfasst:
Löschen der Fehlerdatei als Reaktion auf den Empfange einer vom Server gesendeten Speichererfolgsnachricht.

3. Verfahren nach Anspruch 1, **dadurch gekennzeichnet, dass** das Erzeugen der Fehlerinformationen gemäß dem Fehlercode umfasst:
Bestimmen einer Fehlerart des Fehlers;
Ermitteln eines Namens eines Fehleranwendungspakets, der dem Systemfehler entspricht, wenn die Fehlerart ein Systemfehler ist, und Erzeugen der Fehlerinformationen unter Verwendung des Namens des Fehleranwendungspakets und des Fehlercodes; und
ansonsten, wenn die Fehlerart ein Anwendungsfehler ist, Verwenden des Fehlercodes in den Fehlerinformationen.

4. Verfahren nach Anspruch 2, **dadurch gekennzeichnet, dass** das Erzeugen der Fehlerinformationen gemäß dem Fehlercode umfasst:
Bestimmen einer Fehlerart des Fehlers;
Ermitteln eines Namens eines Fehleranwendungspakets, das dem Systemfehler entspricht, wenn die Fehlerart ein Systemfehler ist, und Erzeugen der Fehlerinformationen unter Verwendung des Namens des Fehleranwendungspakets und des Fehlercodes; und
ansonsten, wenn die Fehlerart ein Anwendungsfehler ist, Verwenden des Fehlercodes in den Fehlerinformationen.

5. Verfahren zum Verarbeiten eines Endgerätefehlers, umfassend:
ein Abrufmodul (10), das dafür ausgelegt ist, einen aktuellen Fehlercode auf Basis einer voreingestellten Fehlercode-Tabelle zu ermitteln, wenn ein Endgerät einen Fehler erfasst;
ein Erzeugungsmodul (20), das dafür ausgelegt ist, Fehlerinformationen gemäß dem Fehlercode zu erzeugen; und
ein Sendemodul (30), das dafür ausgelegt ist, eine Fehleraktivitätsmeldungs-Schnittstelle aufzufordern, die Fehlerinformationen, eine Fehlerdatei und Identifizierungsinformationen des Endgeräts an einen Server zu senden, damit der Server die Fehlerinformationen, die Fehlerdatei und die Identifizierungsinformationen des Endgeräts zusammenhängend speichert, wobei die Fehlerdatei eine Log-Datei umfasst,
**dadurch gekennzeichnet, dass** das Sendemodul (30) dafür ausgelegt ist, die Fehleraktivitätsmeldungs-Schnittstelle aufzufordern, die Fehlerinformationen und die Identifizierungsinformationen des Endgeräts an den Server zu senden, wobei dann, wenn die Fehlerinformationen und die Identifizierungsinformationen des Endgeräts nicht auf dem Server gespeichert sind oder wenn ein Zeitunterschied zwischen einer Fehlerzeit der auf dem Server gespeicherten Fehlerinformationen und eine Fehlerzeit der aktuell empfangenen Fehlerinformationen größer ist als ein vorangestellter Schwellenwert für eine Dauer, der Server eine Antwortnachricht zum Hochladen der Fehlerdatei zurückmeldet; und
als Antwort auf den Empfang der Antwortnachricht die Fehlerdatei an den Server zu senden, damit der Server die Fehlerdatei im Zusammenhang mit den Fehlerinformationen und den Identifizierungsinformationen des Endgeräts speichert.

6. Vorrichtung nach Anspruch 5, **dadurch gekennzeichnet, dass** die Vorrichtung ferner aufweist:
ein Löschmodul, das dafür ausgelegt ist, die Fehlerdatei als Reaktion auf den Empfange einer vom Server gesendeten Speichererfolgsnachricht zu löschen.

7. Vorrichtung nach Anspruch 5, **dadurch gekennzeichnet, dass** das Erzeugungsmodul (20) ferner aufweist:
eine Bestimmungseinheit, die dafür ausgelegt ist, eine Fehlerart des Fehlers zu bestimmen; und
eine Erzeugungseinheit, die dafür ausgelegt ist, einen Namen eines Fehleranwendungspakets zu ermitteln, wenn die Fehlerart ein Systemfehler ist, und die Fehlerinformationen unter Verwendung des Namens des Fehleranwendungspakets und des Fehlercodes zu erzeugen; und ansonsten, wenn die Fehlerart ein Anwendungsfehler ist, den Fehlercode als die Fehlerinformationen zu verwenden.

8. Vorrichtung nach Anspruch 6, **dadurch gekennzeichnet, dass** das Erzeugungsmodul (20) ferner aufweist:
eine Bestimmungseinheit, die dafür ausgelegt ist, eine Fehlerart des Fehlers zu bestimmen; und
eine Erzeugungseinheit, die dafür ausgelegt ist, einen Namen eines Fehleranwendungspakets zu ermitteln, wenn die Fehlerart ein Systemfehler ist, und die Fehlerinformationen unter Verwendung des Namens des Fehleranwendungspakets und des Fehlercodes zu erzeugen; und ansonsten, wenn die Fehlerart ein Anwendungsfehler ist, den Fehlercode als die Fehlerinformationen zu verwenden.

9. System zum Verarbeiten eines Endgerätefehlers, wobei das System ein Endgerät und einen Server umfasst, wobei:
das Endgerät ausgelegt ist zum: Ermitteln eines aktuellen Fehlercodes auf Basis einer voreingestellten Fehlercode-Tabelle, als Reaktion auf die Erfassung eines Fehlers, und zum Erzeugen von Fehlerinformationen gemäß dem Fehlercode; und zum Auffordern einer Fehleraktivitätsmeldungs-Schnittstelle, die Fehlerinformationen, eine Fehlerdatei und Identifizierungsinformationen des Endgeräts an den Server zu senden;
der Server dafür ausgelegt ist, als Reaktion auf den Empfang der Fehlerinformationen, der Fehlerdatei und der Identifizierungsinformationen des Endgeräts, die vom Endgerät gesendet werden, die Fehlerinformationen, die Fehlerdatei und die Identifizierungsinformationen des Endgeräts zusammenhängend zu speichern;
**dadurch gekennzeichnet, dass** der Server ausgelegt ist zum:
Senden einer Antwortnachricht zum Hochladen der Fehlerdatei an das Endgerät, als Antwort auf den Empfang der Fehlerinformationen und der Identifizierungsinformationen des Endgeräts, die vom Endgerät gesendet wurden, damit das Endgerät die Fehlerdatei zurückmeldet, falls die Fehlerinformationen und die Identifizierungsinformationen des Endgeräts nicht auf dem Server gespeichert sind oder falls ein Zeitunterschied zwischen einer Fehlerzeit der Fehlerinformationen, die auf dem Server gespeichert sind, und einer Fehlerzeit der aktuell empfangenen Fehlerinformationen größer ist als eine vorangestellte Schwellenwertdauer; und
Speichern der Fehlerdatei im Zusammenhang mit den Fehlerinformationen und den Identifizierungsinformationen des Endgeräts als Antwort auf den Empfang der Fehlerdatei.

## Revendications

1. Procédé de traitement d'un défaut de terminal, comprenant :
en réponse à la détection d'un défaut, l'obtention, par un terminal, d'un code de défaut actuel sur la base d'une table de codes de défaut prédéfinie ;
la génération d'informations de défaut en fonction du code de défaut ; et
l'invocation d'une interface de rapport actif de défaut pour envoyer les informations de défaut, un fichier de défaut et des informations d'identification du terminal à un serveur, de manière que le serveur stocke de manière associative les informations de défaut, le fichier de défaut et les informations d'identification du terminal, dans lequel le fichier de défaut comprend un fichier journal,
**caractérisé en ce que** le bloc d'invocation de l'interface de rapport actif de défaut pour envoyer les informations de défaut, le fichier de défaut et les informations d'identification du terminal au serveur, de manière que le serveur stocke de manière associative les informations de défaut, le fichier de défaut et les informations d'identification du terminal, comprend :
l'invocation de l'interface de rapport actif de défaut pour envoyer les informations de défaut et les informations d'identification du terminal au serveur, dans lequel quand les informations de défaut et les informations d'identification du terminal ne sont pas stockées sur le serveur ou quand une différence de temps entre un temps de défaut des informations de défaut stockées sur le serveur et un temps de défaut des informations de défaut actuellement reçues est supérieure à une durée de seuil prédéfinie, le serveur renvoie un message de réponse pour téléverser le fichier de défaut ; et
en réponse à la réception du message de réponse, l'envoi du fichier de défaut au serveur de manière que le serveur stocke le fichier de défaut de manière associative avec les informations de défaut et les informations d'identification du terminal.

2. Procédé selon la revendication 1, **caractérisé en ce que** le procédé comprend en outre, subséquemment à l'envoi du fichier de défaut au serveur de manière que le serveur stocke le fichier de défaut de manière associative avec les informations de défaut et les informations d'identification du terminal :
la suppression du fichier de défaut en réponse à la réception d'un message de réussite de sauvegarde envoyé par le serveur.

3. Procédé selon la revendication 1, **caractérisé en ce que** la génération des informations de défaut en fonction du code de défaut comprend :
la détermination d'un type de défaut du défaut ;
quand le type de défaut est un défaut de système, l'obtention d'un nom de progiciel d'application de défaut correspondant au défaut de système et la génération des informations de défaut en utilisant le nom de progiciel d'application de défaut et le code de défaut ; et
sinon, quand le type de défaut est un défaut d'application, l'utilisation du code de défaut comme les informations de défaut.

4. Procédé selon la revendication 2, **caractérisé en ce que** la génération des informations de défaut en fonction du code de défaut comprend :
la détermination d'un type de défaut du défaut ;
quand le type de défaut est un défaut de système, l'obtention d'un nom de progiciel d'application de défaut correspondant au défaut de système et la génération des informations de défaut en utilisant le nom de progiciel d'application de défaut et le code de défaut ; et
sinon, quand le type de défaut est un défaut d'application, l'utilisation du code de défaut comme les informations de défaut.

5. Dispositif de traitement d'un défaut de terminal, comprenant :
un module d'acquisition (10) configuré pour obtenir un code de défaut actuel sur la base d'une table de codes de défaut prédéfinie quand un terminal détecte un défaut ;
un module de génération (20) configuré pour générer des informations de défaut en fonction du code de défaut ; et
un module de transmission (30) configuré pour invoquer une interface de rapport actif de défaut pour envoyer les informations de défaut, un fichier de défaut et des informations d'identification du terminal à un serveur, de manière que le serveur stocke de manière associative les informations de défaut, le fichier de défaut et les informations d'identification du terminal, dans lequel le fichier de défaut comprend un fichier journal,
**caractérisé en ce que** le module de transmission (30) est configuré pour :
invoquer l'interface de rapport actif de défaut pour envoyer les informations de défaut et les informations d'identification du terminal au serveur, dans lequel quand les informations de défaut et les informations d'identification du terminal ne sont pas stockées sur le serveur ou quand une différence de temps entre un temps de défaut des informations de défaut stockées sur le serveur et un temps de défaut des informations de défaut actuellement reçues est supérieure à une durée de seuil prédéfinie, le serveur renvoie un message de réponse pour téléverser le fichier de défaut ; et
en réponse à la réception du message de réponse, envoyer le fichier de défaut au serveur de manière que le serveur stocke le fichier de défaut de manière associative avec les informations de défaut et les informations d'identification du terminal.

6. Dispositif selon la revendication 5, **caractérisé en ce que** le dispositif comprend en outre :
un module de suppression configuré pour supprimer le fichier de défaut en réponse à la réception d'un message de réussite de sauvegarde envoyé par le serveur.

7. Dispositif selon la revendication 5, **caractérisé en ce que** le module de génération (20) comprend :
une unité de détermination configurée pour déterminer un type de défaut du défaut ; et
une unité de génération configurée pour, quand le type de défaut est un défaut de système, obtenir un nom de progiciel d'application de défaut correspondant au défaut de système et pour générer les informations de défaut en utilisant le nom de progiciel d'application de défaut et le code de défaut ; et sinon, quand le type de défaut est un défaut d'application, utiliser le code de défaut comme les informations de défaut.

8. Dispositif selon la revendication 6, **caractérisé en ce que** le module de génération (20) comprend :
une unité de détermination configurée pour déterminer un type de défaut du défaut ; et
une unité de génération configurée pour : quand le type de défaut est un défaut de système, obtenir un nom de progiciel d'application de défaut correspondant au défaut de système et pour générer les informations de défaut en utilisant le nom de progiciel d'application de défaut et le code de défaut ; et sinon, quand le type de défaut est un défaut d'application, utiliser le code de défaut comme les informations de défaut.

9. Système de traitement d'un défaut de terminal, le système comprenant un terminal et un serveur, dans lequel :
le terminal est configuré pour : en réponse à la détection d'un défaut, obtenir un code de défaut actuel sur la base d'une table de codes de défaut prédéfinie et générer des informations de défaut en fonction du code de défaut ; et invoquer une interface de rapport actif de défaut pour envoyer les informations de défaut, un fichier de défaut et des informations d'identification du terminal au serveur ;
le serveur est configuré pour, en réponse à la réception des informations de défaut, du fichier de défaut et des informations d'identification du terminal envoyés par le terminal, stocker de manière associative les informations de défaut, le fichier de défaut et les informations d'identification du terminal,
**caractérisé en ce que** le serveur est configuré pour :
en réponse à la réception des informations de défaut et des informations d'identification du terminal envoyées par le terminal, envoyer au terminal un message de réponse pour téléverser le fichier de défaut de manière que le terminal renvoie le fichier de défaut, si les informations de défaut et les informations d'identification du terminal ne sont pas stockées sur le serveur ou si une différence de temps entre un temps de défaut des informations de défaut stockées sur le serveur et un temps de défaut des informations de défaut actuellement reçues est supérieure à une durée de seuil prédéfinie ; et
en réponse à la réception du fichier de défaut, stocker le fichier de défaut de manière associative avec les informations de défaut et les informations d'identification du terminal.
